# EUROPEAN PATENT APPLICATION

(11) **EP 1 324 081 A2**
(43) Date of publication of application: **02.07.2003**
(21) Application number: 02102769.3
(22) Date of filing: 16.12.2002
(51) Int. Cl.: G02B 6/12

(54) **Photonic band gap structures**

(30) Priority: 19.12.2001 US 341987 P
(71) Applicant: Texas Instruments Incorporated, Dallas, Texas 75251 (US)
(72) Inventor: Miller, Seth A., Sachse 75048 Texas (US); Koontz, Elisabeth Marley, 75206, Dallas (US)
(74) Representative: Holt, Michael

(57) **Abstract**

A method of fabricating a 3-D photonic band gap structure (10). The method can be applied to any such structure made using stacked layers (21, 22) of materials having alternating low and high refractive indices. At least one of these layers (21, 22) is deposited using extrusion coating, which eliminates the need for planarization, such as chemical mechanical polishing.

## Description

### TECHNICAL FIELD OF THE INVENTION

This invention relates to microphotonic devices, and more particularly to a fabricating photonic band gap structures with one or more layers deposited by extrusion coating.

### BACKGROUND OF THE INVENTION

Photonic band gap (PBG) structures are periodic dielectric structures that forbid propagation of electromagnetic waves in a certain frequency range. These structures have opened up a variety of possible applications (in lasers, antennas, millimeter wave devices, efficient solar cells photocatalytic processes). They also give rise to interesting new physics, such as cavity electrodynamics, localization, disorder, and photon-number-state squeezing.

A PBG in a photonic crystal is the optical analog of an electronic band gap in a semiconductor. A periodic variation in the dielectric constant forbids certain photon energies within the semiconductor. Specifically, for a two dimensional PBG, the propagation of light within a certain range of frequencies is inhibited in any direction in a plane.

PBG crystals may be fabricated from silicon wafers using processes already known in the fabrication of integrated circuits. Realization of PBG structures is highly design dependent, both in terms of minimum feature size and complexity.

One challenge in the field of PBG opto-electronics has been the development of a photonic crystal that confines optical waves in all three dimensions. A particular challenge has been to realize a 3-D crystal that operates at communication wavelengths. Recently developed 3-D PBG structures have alternating layers of high refractive index and low refractive index materials. The layers are typically deposited by methods conventionally used for semiconductor fabrication, such as epitaxy, chemical vapor deposition (CVD), and spin coating. In many instances, the particularities of PBG structures require that the deposition be followed by precise planarization and subsequent cleaning.

### SUMMARY OF THE INVENTION

One aspect of the invention is a method of fabricating a 3-D photonic band gap (PBG) structure. The first step is depositing a first layer material. This material is patterned and etched to form grid elements. Next, a second layer material is deposited, such that the second layer material fills gaps between the grid elements. Successive layers are deposited, patterned, and etched to form a lattice structure from the first layer material. At least one of the depositing steps is performed by extrusion coating. Also, the first layer material or the second layer material have mismatched indices of refraction. In other words, one is a material having a high index of refraction. The other is a material having a low index of refraction, which may be air.

With other (non-extrusion) deposition methods, the deposited material conforms to the underlying surface, requiring extensive planarization. Planarization has its own drawbacks, such as the need for subsequent cleaning.

An advantage of the invention is that layers of the PBG structure can be deposited and planarized in one step. In other words, the extrusion coating is "self planarizing". The thickness control and planarity achievable with extrusion coating can be as good as or better than that achievable with other deposition processes and planarization.

The use of extrusion coating as a deposition means permits the use of PBG structures made from materials that would not be practical with other deposition means. This results in the potential for new classes of PBG structures with increased complexity, functionality, and versatility.

In sum, extrusion deposition for 3-D PBG structures results in simpler and less expensive fabrication, higher yields, and enables the use of new improved materials.

### BRIEF DESCRIPTION OF THE DRAWINGS

FIGURE 1 illustrates an example of a PBG structure, made with extrusion coating in accordance with the invention.

FIGURE 2 illustrates the fabrication process for a five-layer PBG structure having a design like that of FIGURE 1.

### DETAILED DESCRIPTION OF THE INVENTION

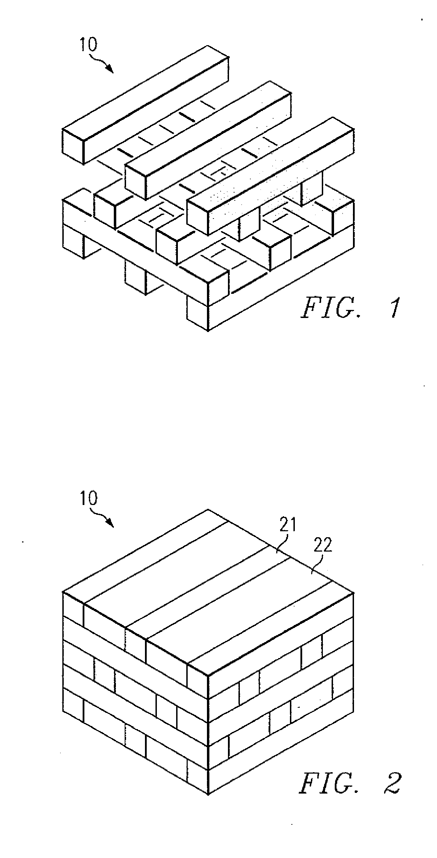

FIGURE 1 illustrates an example of a 3-D photonic band gap (PBG) structure 10 made using extrusion coating in accordance with the invention. Essentially, PBG structure 10 comprises a lattice-like stacked layer of grids, separated by air. As explained below, PBG structure 10 is made using micromachining techniques and a layer-by-layer stacking design.

As illustrated, PBG structure 10 has layers of one-dimensional bars with a stacking sequence that repeats itself every four layers. An example of such a structure is described in U.S. Patent No. 5,998,298, entitled "Use of Chemical Mechanical Polishing for Fabricating Photonic Band Gap Structures", to Fleming, et al.

The design of FIGURE 1 is but one example of a 3-D PBG structure. Many other designs are possible, and the invention is useful for any 3-D PBG design made using layer-by-layer stacking of elements.

FIGURE 2 illustrates the fabrication process for a layered 3-D PBG structure having a design like that of FIGURE 1. Within each layer, silicon rods 21 are patterned and the spaces between them filled with silicon dioxide spacers 22. The process is repeated until the desired number of layers 21 has been made. As a final step of the process, the silicon dioxide spacers 22 are removed by selective wet etching. This results in the lattice-like PBG structure 10. The patterning may be achieved by conventional photopatterning and etching or by some other means to achieve the desired features, such as molding which may be appropriate for certain materials.

In structures of the type illustrated in FIGURES 1 and 2, the first (bottom) polysilicon layer is deposited and patterned. A layer of silicon dioxide is then deposited between the lines of polysilicon. Successive layers are fabricated in a similar manner.

A feature of the invention is the use of extrusion coating as the deposition means for the silicon layer or for the silicon dioxide layer or for both layers. This method of deposition avoids the need for chemical mechanical polishing (CMP), as is required when these layers are deposited by other means. By "extrusion coating" is meant the application of materials in liquid form by means of a pumping and delivery system.

The same fabrication process may be used for PBG structures that use other materials. In general, a PBG structure has alternating layers of two types of materials, one having a high refractive index and the other having a low refractive index. An object in construction of PBG structures is to maximize the contrast of the refractive indices of the materials used in the alternating layers.

The low refractive index layer could be made from other materials such as silicon dioxide or organic polymers, as alternatives to air. Other possible materials are aerogels (deposited as an aerogel precursor), or photoresist.

Similarly, the high refractive index layer may be made from materials other than silicon. For example, titanium dioxide may be suitable. Other examples are organic semiconductors, III-V materials, such as InP or GaAs and their derivatives, or II-VI materials, such as ZnSe, ZnMgSSe, etc.

As stated above, when deposition methods other than extrusion coating are used, planarization methods such as CMP were often performed. As a result, the materials available for PBG structures were limited to materials suited for those means of achieving planarization.

However, the use of extrusion coating as a deposition method can be expected to permit the use, for either the low or high refractive index layer, of materials that may not otherwise be suitable for other type of deposition. In other words, the elimination of the planarization that must follow other deposition methods eliminates a significant constraint on the types of materials that may be used. With the use of extrusion coating as a "self planarizing" method of deposition, examples of new materials that may be used include fluorocarbons, piezoelectrics, and electro-optical polymers. Essentially, any material that can be deposited in liquid form could be used. Other examples of suitable materials are TiO₂, AlxOy, and light emitting polymers, and other direct band gap materials.

Although extrusion coating is typically associated with deposition of large surfaces and thick coatings, it can be downscaled for use with PBG structures. Thickness control and planarity can be achieved that is comparable or better than that achieved with other deposition means and CMP.

An example of suitable extrusion coating equipment is that manufactured by FAS Technologies of Dallas, Texas. This equipment is suitable for deposition on silicon wafers, as well as larger surfaces.

As stated above, the invention is not limited to use with any particular design of a PBG structure, and the design of FIGURES 1 and 2 is but one example. Another example of a PBG structure with which the method described herein could be used is described in an article by S. Johnson and J.D. Joannopoulos, entitled "Three-Dimensionally Periodic Dielectric Layered Structure with Omnidirectional Photonic Band Gap", Applied Physics Letters, Vol. 77, No 22, Nov 27, 2000.

PBG structures, such as PBG structure 10, have a stopband at given wavelengths, depending on the period of the structure (as determined by its dimensions) and the materials used in its construction (specifically, the contrast in refractive indices of its alternating layers). Although many PBG structures are designed for optical communications wavelengths, PBG structures for other applications, such as for acoustic or visible light wavelengths, are also common.

Although the present invention has been described in detail, it should be understood that various changes, substitutions, and alterations can be made hereto without departing from the scope of the invention as defined by the appended claims.

## Claims

1. A method of fabricating a 3-D photonic band gap structure, comprising the steps of:
depositing a first layer material;
patterning the first layer material to form grid elements;
depositing a second layer material, such that the second layer material fills gaps between the grid elements;
depositing and patterning successive layers to form a lattice structure from alternating layers of the first layer material and the second layer material;
wherein at least one of the depositing steps is performed by extrusion coating; and
wherein the first layer material or the second layer material have different indices of refraction.

2. The method of Claim 1, wherein the first or second layer material is primarily a material selected from the group consisting of silicon, titanium dioxide, silicon dioxide, a fluorocarbon, a piezoelectric material, an electro-optical polymer, a III-V compound, a II-VI compound, aerogel, photoresist, an organic semiconductor material, and a light emitting polymer.

3. The method of Claim 1, further comprising the step of removing the second layer material to form air gaps between the grid elements.

4. A 3-D photonic band gap structure, comprising:
alternating layers of a first material and a second material, patterned and etched to form a lattice-like structure;
wherein at least one of the layers is an extrusion coating material; and
wherein the first material and the second material have different indices of refraction.

5. The PBG structure of Claim 4, wherein either the first or the second material is selected from the group consisting of:
a fluorocarbon, a piezoelectric, or an electro-optical polymer.

6. The PBG structure of Claim 4, wherein the first or the second material is air.

7. The PBG structure of Claim 4, wherein the first or second material is a light emitting polymer.

8. In a method for fabricating a 3-D photonic band gap structure having alternating layers of material having different indices of refraction, an improvement comprising:
depositing one or more of the layers by means of extrusion coating.
